# NEUE EUROPÄISCHE PATENTSCHRIFT

(11) **EP 2 666 532 B2**
(45) Veröffentlichungstag und Bekanntmachung des Hinweises auf die Entscheidung über den Einspruch: **13.11.2019**
(45) Hinweis auf die Patenterteilung: 01.03.2017
(21) Anmeldenummer: 13161197.2
(22) Anmeldetag: 26.03.2013
(51) Int. Cl.: B01D 46/24, B01D 35/147, B01D 46/00, B01D 29/23, B01D 29/35

(54) **Filtereinheit für ein Barrieresystem**
Filter unit for a barrier system
Unité de filtration pour un système de barrière

(30) Priorität: 22.05.2012 DE 102012208574
(43) Veröffentlichungstag der Anmeldung: 27.11.2013
(73) Patentinhaber: ROBERT BOSCH GMBH, 70442 Stuttgart (DE)
(72) Erfinder: Groeber, Steffen, 74423 Obersontheim (DE); Bayer, Michael, 91626 Schopfloch (DE); Stadelmann, Florian, 91578 Leutershausen (DE); Hoffmann, Benjamin, 74189 Weinsberg (DE)
(74) Vertreter: DREISS Patentanwälte PartG mbB

(56) Entgegenhaltungen:
- EP-A1- 1 389 486
- EP-A2- 0 947 232
- WO-A1-2010/088782
- DE-C1- 4 216 102
- US-A- 4 045 349
- US-A- 4 497 706

## Beschreibung

### Stand der Technik

Die vorliegende Erfindung betrifft eine Filtereinheit zum Einsetzen in einen Rückluft- oder Abluftkanal eines Barrieresystems.

Insbesondere bei der Verpackung und Abfüllung von zum Beispiel flüssigen oder pulverförmigen Medikamenten kommen zum Produktschutz und zum Personenschutz sowohl Isolatoren als auch Reinräume zum Einsatz. Die Zahl von hochaktiven Wirkstoffen ist in der Pharmaindustrie stetig steigend. Um die Bedienungspersonen zu schützen, bedarf es geeigneter Filterstufen und Filteranordnungen. Hier kommen bevorzugt sog. Bag-in-/ Bag-out-Filtersysteme zum Einsatz, welche neben der eigentlichen Luftfiltration auch einen kontaminationsfreien Filterwechsel zulassen. Neben dem Filter sind in der Regel auch die Luftkanäle zum Filter kontaminiert. Deshalb besteht die Notwendigkeit, diese Luftkanäle zu reinigen. Hier spricht man von einem Wash-in-Place-Prozess. Dieser Wash-in-Place-Prozess wird üblicherweise mit fest installierten Sprühköpfen im Luftkanal durchgeführt. Als Waschmedium wird umfangreich aufbereitetes Wasser verwendet. Bei dem Wechsel der Filter kann der Filter zum Austausch mit Abdeckungen verschlossen und ggf. entsorgt werden. Exemplarisch sei hierzu auf die US 4,266,955 verwiesen. Einen beispielhaften Isolator zeigt die Druckschrift DE 199 47 781 C1.

Aus der WO 2010/088782 A1 ist bereits eine Filtervorrichtung für eine von einem Gasstrom durchflossene Anlage mit einer Arbeitskammer zur temporären Aufnahme von Behandlungsgut bekannt. Die Filtervorrichtung besitzt eine auswechselbare Filtereinheit mit einem an einem Eintritt vorgesehenen Filteranschluss, der zum lösbaren Andocken an einem an der Arbeitskammer vorhandenen Kammeranschluss bestimmt ist, der sich an der Austrittsöffnung befindet. Weiterhin sind ein Filterdeckel zum Verschließen des Eintritts, ein Filtereinsatz zum Reinigen des über die Austrittsöffnung und den Eintritt fließenden Gasstroms und einen Austritt zum Abführen des den Filtereinsatz durchströmenden Gasstroms vorgesehen. Zur Bewegung des Filterdeckels ist zwischen einer am Eintritt geschlossenen und dessen offener Stellung ein Spindelmechanismus vorgesehen, der einen integralen Bestandteil der Filtereinheit bildet. Der Spindelmechanismus besitzt ein außerhalb des Filtereinsatzes positioniertes Endstück, welches zum Generieren einer Schubbewegung des Spindelmechanismus dient. Dieses Endstück muss für das Bedienpersonal manuell oder mittels Werkzeug frei zugänglich sein zur Betätigung des Spindelmechanismus. Bei einer Anlage sind in der Regel eine Vielzahl von auswechselbaren Filtereinheiten vorgesehen, die jeweils einzeln zum Verschließen des Filterdeckels betätigt werden müssen. Dies ist sehr zeitaufwändig.

Der Erfindung liegt die Aufgabe zugrunde, die vorgeschlagene Filtereinrichtung weiter zu verbessern. Diese Aufgabe wird gelöst durch die Merkmale des unabhängigen Anspruchs.

### Vorteile der Erfindung

Die erfindungsgemäße Filtereinheit für ein Barrieresystem gemäß den Merkmalen des unabhängigen Anspruchs hat demgegenüber den Vorteil, dass der den Deckel bewegende Mechanismus so ausgebildet ist, dass eine automatische Betätigung auch mehrerer Filtereinheit gleichzeitig vorgenommen werden kann. Dies könnte beispielsweise über Druckbetätigung, elektromotorische oder elektromagnetische Verstelleinrichtungen erfolgen. Weiterhin kann der Verstellmechanismus relativ kompakt und bevorzugt teilweise in den Deckel integriert werden. Vorzugsweise erfolgt die Betätigung des Mechanismus durch die Beaufschlagung einer integrierten Kolbenaufnahme mit Über- oder Unterdruck. Die Kolbenaufnahme zeichnet sich dadurch aus, dass sie ein integraler Bestandteil des Gesamtsystems Filterelement ist. In einem Reinraum oder Isolator können bevorzugt mehrere solcher Filtereinrichtungen angeordnet werden, die innerhalb eines Gesamtsystems zum Öffnen oder Schließen der Filterdeckel angesteuert werden können. Dadurch wird die Arbeit des Bedienpersonals erleichtert, da nun eine Tätigkeit bei geschlossenen Schutztüren erfolgen kann. Aufwändige Montagetätigkeiten können minimiert werden.

Der Wechsel der Filter zeichnet sich dadurch aus, dass er ein hohes Maß an Sicherheit im Umgang mit gefährlichen Substanzen aufweist, da der Filterverschluss sehr einfach und sicher möglich ist. Bei der Wahl des Bewegungsmechanismus werden erfindungsgemäss die Filterelemente so ausgeführt, dass sie sich bei Ausfall von Hilfsenergie wie beispielsweise Strom, Druck, Vakuum federbetätigt automatisch schließen und die auf der Rohluftseite enthaltenen Gefahrstoffe im Filter sicher kapseln.

Durch die Integration des Betätigungsmechanismus in das Filterelement wird zudem der Platzbedarf reduziert. Gerade durch die innen liegende Anordnung der Bewegungsmechanik kann zudem eine aufwändige Reinigung reduziert werden. Zudem wird die Einsatzmöglichkeit in sterilen Systemen verbessert, da die Verschließmechanik im Filterelement angeordnet ist und nicht im eigentlichen Prozessraum. Kritisch überdeckte Flächen können dadurch weitestgehend ausgeschlossen werden. Zudem ist keinerlei Zusatzmaterial in das Barrieresystem/Isolator einzubringen, um die genannten Handlungen durchzuführen, denn die Materialien und Komponenten sind Teil des Filterelements.

Weitere zweckmäßige Weiterbildungen ergeben sich aus weiteren abhängigen Ansprüchen und aus der Beschreibung.

### Zeichnung

Mehrere Ausführungsbeispiele werden in den Figuren dargestellt und nachfolgend näher beschrieben.

Es zeigen:
die Figur 1 ein Barrieresystem mit einer erfindungsgemäßen Filtereinheit gemäß den Ausführungsbeispielen,
die Figur 2 eine Schnittdarstellung eines ersten Ausführungsbeispiels mit einer Filtereinheit, deren Deckel zur Innenseite eines Flansches hin abdichtet,
die Figur 3 eine perspektivische Darstellung des ersten Ausführungsbeispiels,
die Figur 4 eine perspektivische Darstellung eines weiteren Ausführungsbeispiels, bei dem der Deckel der Filtereinheit nach außen gegenüber dem Flansch abdichtet, im geöffneten Zustand,
die Figur 5 eine Schnittdarstellung des zweiten Ausführungsbeispiels nach Figur 4 im geschlossenen Zustand,
die Figur 6 ein weiteres Ausführungsbeispiel mit mehreren Öffnungen, die gegenüber dem Deckel von der Innenseite des Flansches verschließbar angeordnet sind,
die Figur 7 einen Querschnitt des Ausführungsbeispiels nach Figur 6.

### Ausführungsformen der Erfindung

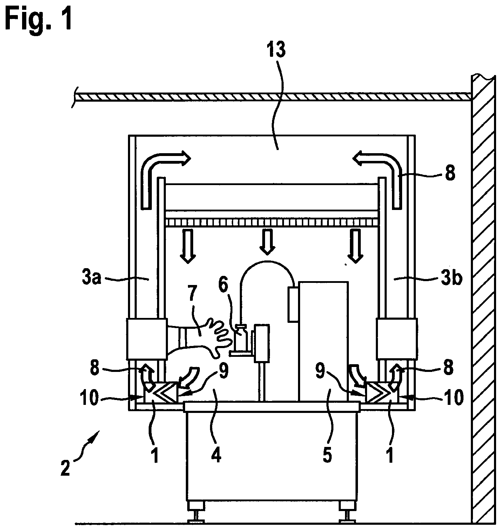

Anhand von Figur 1 wird ein erfindungsgemäßes Barrieresystem 2 mit den erfindungsgemäßen Filtereinheiten 1 vorgestellt.

Das Barrieresystem 2 weist einen hermetisch abgeschlossenen Bearbeitungsraum 4 auf. In diesem Bearbeitungsraum 4 befindet sich eine Abfüllmaschine 5 für flüssige oder pulverförmige Medikamente. Die Medikamente werden in ein Behältnis 6 abgefüllt. Der Zugriff durch den Benutzer erfolgt über die Handschuheingriffe 7. Nicht dargestellt sind Ein- und Austrittsschleusen, beispielsweise für die Behältnisse 6. Zwischen einer Glasdoppelscheibe ist ein Rückluftkanal 3a ausgebildet. Der Rückluftkanal 3b könnte alternativ zur Glasdoppelscheibe auch anders ausgebildet sein, z.B. als separate Metallblechkonstruktion. Die Rückluftkanäle 3a, 3b führen von der Filtereinheit 1 in eine weitere Einheit, beispielsweise in eine LF-Einheit 13. Mit den dick dargestellten Pfeilen ist eine Luftströmung 8 im Barrieresystem 2 dargestellt. Die Luftströmung 8 führt von einer Luftaustrittsseite 10 der Filtereinheiten 1 über die Rückluftkanäle 3a, 3b zu einer LF-Einheit 13.

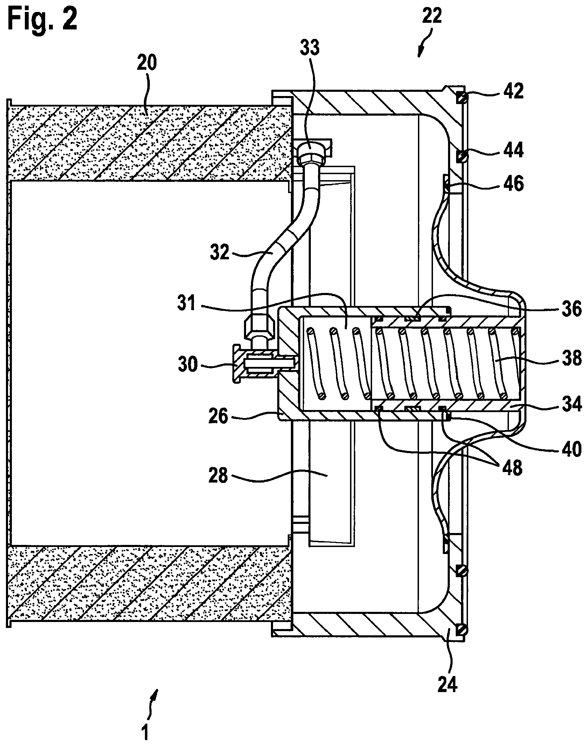

Figur 2 zeigt die Filtereinheit 1 gemäß einem ersten Ausführungsbeispiel. Die austauschbare Filtereinheit 1 umfasst einen Filter 20, der im Ausführungsbeispiel beispielhaft als zylinderförmige Kartusche dargestellt ist. Der Filter 20 ist fest verbunden mit einem Filterverschluss 22. Der Filterverschluss 22 besteht aus einem rohrförmigen Teil und dient teilweise als nicht näher bezeichnete zylinderförmige Auflagefläche in axialer Richtung für die kreisförmige Stirnseite des Filters 20. Gleichzeitig überdeckt der Filterverschluss 22 in axialer Richtung die obere Außenseite des Filters 20 durch einen geringfügig größeren Innenradius. Der Filterverschluss 22 umfasst eine Kolbenaufnahme 26, welche durch eine Befestigung 28 mit dem Filterverschluss 22 verbunden ist. Die Achse der Kolbenaufnahme 26 ist im Wesentlichen parallel zur Bewegungsrichtung eines Deckels 40 orientiert. An der Stirnseite der Kolbenaufnahme 26 ist ein Anschluss 30 für eine Leitung 32 vorgesehen. Die Leitung 32 verläuft durch den Innenraum des Filters 20 und wird radial durch die Mantelfläche des Filterverschlusses 22 nach außen zu einem äußeren Anschluss 33 geführt. Über diesen Anschluss 33 lässt sich die austauschbare Filtereinheit 1 mit einer am Gehäuse des Barrieresystems 2 angeordneten Hauptleitung verbinden.

Die Kolbenaufnahme 26 dient der Führung eines Kolbens 34. Zwischen Kolbenaufnahme 26 und Kolben 34 ist eine Kolbenführung 36 vorgesehen, beispielsweise in Form eines Kolbenführungsrings 36. Zudem ist zwischen Kolben 34 und Kolbenaufnahme 26 zumindest eine Dichtung 48 angeordnet, bevorzugt zwei Dichtungen 48 in Form von Kolbendichtungsringen. Alternativ könnten Kolbenführung und/oder Kolbenabdichtung direkt im Kolben 34 integriert werden, insbesondere bei einem Kunststoffspritzgussteil. Die Kolbenaufnahme 26 umschließt in diesen Bereichen den Kolben 34 zumindest teilweise. Der Kolben 34 ist gegenüber der Kolbenaufnahme 26 durch eine Druckfeder 38 in Achsrichtung vorgespannt. Hierzu stützt sich die Feder 38 auf der geschlossenen Stirnseite des Kolbens 34 und der gegenüberliegenden Stirnseite der Kolbenaufnahme 26 ab. Auf der dem Anschluss 30 zugewandten Seite ist der Kolben 34 geöffnet, auf der dem Anschluss 30 abgewandten Stirnseite geschlossen. Der Kolben 34 ist an der vom der Kolbenaufnahme 26 abgewandten Seite mit dem Deckel 40 verbunden oder Teil des Deckels 40. Der Deckel 40 weist eine im Wesentlichen kreisförmige Struktur auf. Der mittlere Bereich des Deckels 40 steht gegenüber dem Randbereich des Deckels 40 über, nämlich in entgegen gesetzter Richtung zum Filter 20. In diesem überstehenden mittleren Bereich des Deckels 40 ist der Kolben 34 zumindest teilweise angeordnet, so dass der Filterverschluss 22 relativ schmal ausgeführt werden kann. Die vom Filter 20 abgewandte Seite des Deckels 40 überdeckt im geschlossenen Zustand, wie in Figur 2 gezeigt, dichtend und bündig eine Öffnung 50 an der Innenseite des Filterflansches 24.

Zur sicheren Abdichtung im geschlossenen Zustands des Deckels 40 ist eine Verschlussdichtung 46 vorgesehen, die zwischen Filterflansch 24 und Außenseite des Deckels 40 angeordnet ist. Beispielhaft könnte die Verschlussdichtung 46 in einer Nut am Deckel 40 eingelegt sein. An der Außenseite, also an der vom Filter 20 abgewandten Seite, weist der Filterflansch 24 eine äußere Flanschdichtung 42 und eine innere Flanschdichtung 44 auf. Dadurch wird eine dichte Verbindung der Filtereinheit 1 mit dem Einbauort, beispielsweise dem Gehäuse oder der Doppelscheibe des Barrieresystems 2, im eingebauten Zustand erreicht.

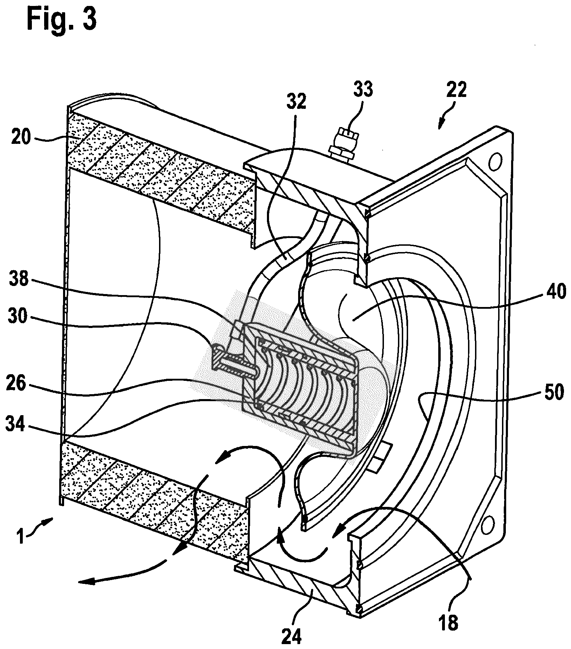

Gemäß Figur 3 ist die in Figur 2 gezeigte Filtereinheit 1 im geöffneten Zustand dargestellt. Mit den Pfeilen 18 ist die Luftführung angedeutet. Die Luft gelangt über die Öffnung 50 unterhalb des Deckels 40 in den Innenraum der Filtereinheit 1 und strömt durch den Filter 20 hindurch zu den Rückluftkanälen 3 weiter ab. Dieser Darstellung lässt sich auch entnehmen, dass im geöffneten Zustand der Kolben 34 an der Stirnseite der Kolbenaufnahme 26 anstößt. Hierzu wird über die Leitung 32 und den Anschluss 30 ein Unterdruck erzeugt, der den Kolben 34 und den damit verbundenen Deckel 40 zur Stirnseite der Kolbenaufnahme 26 hin ansaugt. Die hierbei erzeugte Kraft ist größer als die Federkraft der Druckfeder 38, so dass eine Bewegung entgegen der Federkraft erfolgt. Dadurch wird die Druckfeder 38 vorgespannt bzw. komprimiert. Sollte der so erzeugte Unterdruck beispielsweise im Fehlerfall zusammenbrechen, würde die Feder 38 den Deckel 40 in den geschlossenen Zustand bringen. Dadurch können im Fehlerfall keine undefinierten offenen Zustände der Filtereinheit 1 auftreten. Die Innenseiten von Kolben 34 und Kolbenaufnahme 26 bilden einen Druckraum 31. Über die Druckverhältnisse in diesem Druckraum 31 kann die Relativbewegung zwischen Kolben 34 und Kolbenaufnahme 26 gesteuert werden.

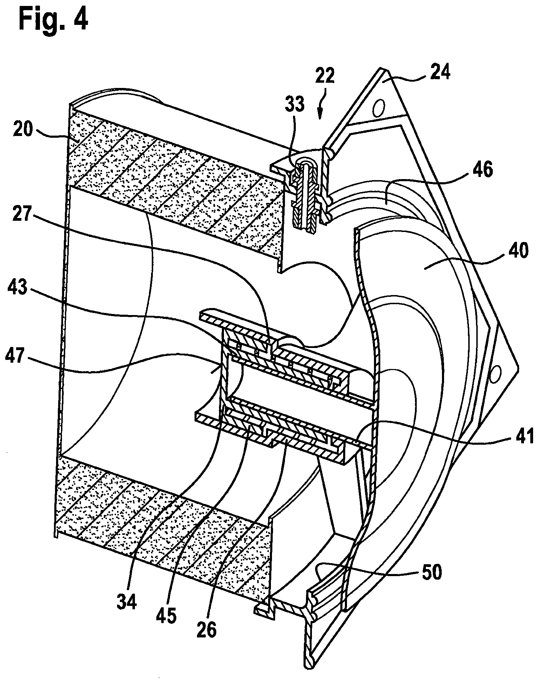

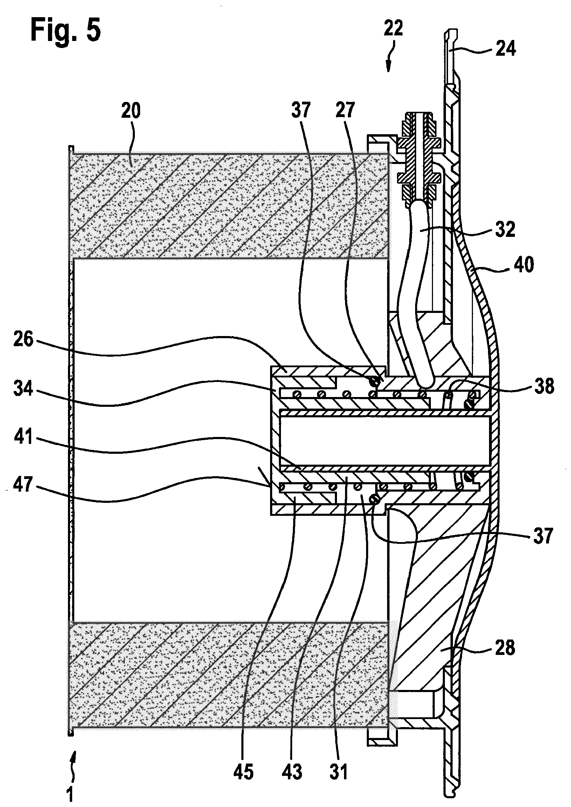

Das Ausführungsbeispiel gemäß den Figuren 4 und 5 unterscheidet sich von demjenigen nach den Figuren 2 und 3 darin, dass der Deckel 40 die vom Filter 20 abgewandte Seite des Flansches 24 überdeckt. Die Öffnung 50 wird nun von der zum Filter 20 hin orientierten Innenseite des Deckels 40 verschlossen. Im geöffneten Zustand, wie in der Figur 4 dargestellt, entfernt sich der Deckel 40 vom Filter 20 und vom Flansch 24. Die Besonderheit dieser Ausführungsform liegt in einer minimierten Bautiefe des Filterflansches 24 bzw. des Filterverschlusses 22. In diesem Ausführungsbeispiel wird der Kolben 34 bei der Montage mit einem Schaft 41 des Deckels 40 fest verbunden, wie beispielsweise durch Verschrauben oder Verkleben. Der Kolben 40 ist hülsenförmig aufgebaut und umgibt mit einem inneren Ring 43 einerseits den zylinderförmigen Schaft 41 des Deckels 40 zur Schaffung einer festen Verbindung. Auf der vom Deckel 40 entfernten Seite weist der Kolben 40 einen geschlossenen Boden 47 auf mit einem größeren Radius als der innere Ring 43. Von der Außenseite des Bodens 47 aus erstreckt sich axial in Richtung des Deckels 40 ein äußerer Ring 45, der im geöffneten Zustand gemäß Figur 4 mit einem Vorsprung 27 der Kolbenaufnahme 26 zusammenwirkt. Die Kolbenaufnahme 26 weist auf der dem Filter 20 zugewandten Seite einen Bereich mit größerem Durchmesser auf, in dem der Ring 45 des Kolbens 26 geführt wird. Nach dem stufigen Vorsprung 27 ist der Durchmesser der Kolbenaufnahme 26 geringer, so dass der Vorsprung 27 als Auflagefläche für die Stirnseite des äußeren Rings 45 dienen kann. In der Ecke des Vorsprungs 27 kann eine Dichtung oder ein Anschlag 37 angeordnet sein zur Abdichtung des Innenraums der Kolbenaufnahme 26 gegenüber dem Innenraum des Filters 20 bzw. als definierte Anschlagfläche zwischen Kolben 34 und Kolbenaufnahme 26. Zwischen dem inneren Ring 43, dem äußeren Ring 45 und der Kolbenaufnahme 26 ist eine Feder 38 angeordnet. Die Leitung 32 mündet radial in demjenigen Bereich der Kolbenaufnahme 26 mit geringerem Durchmesser in den Zwischenraum, in dem auch die Feder 38 angeordnet ist.

Dieser Zwischenraum wirkt als Druckraum 31, so dass über dessen Druckverhältnisse die Bewegung des Kolbens 34 (und damit des Deckels 40) relativ zum Aufnahme 26 gesteuert werden kann. Die Beeinflussung des Drucks kann beispielsweise hydraulisch oder pneumatisch erfolgen.

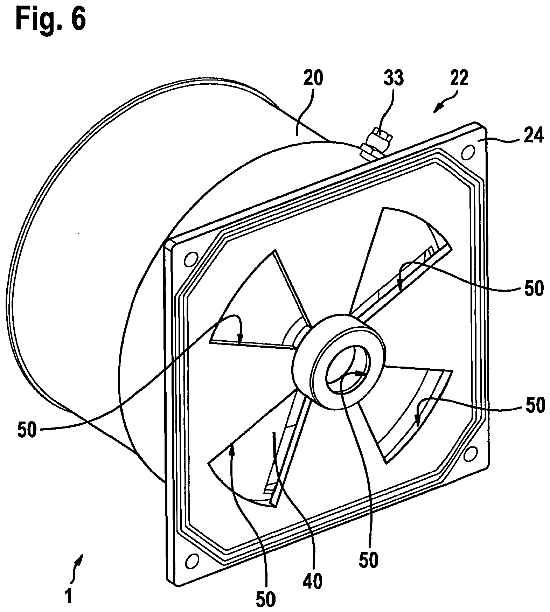

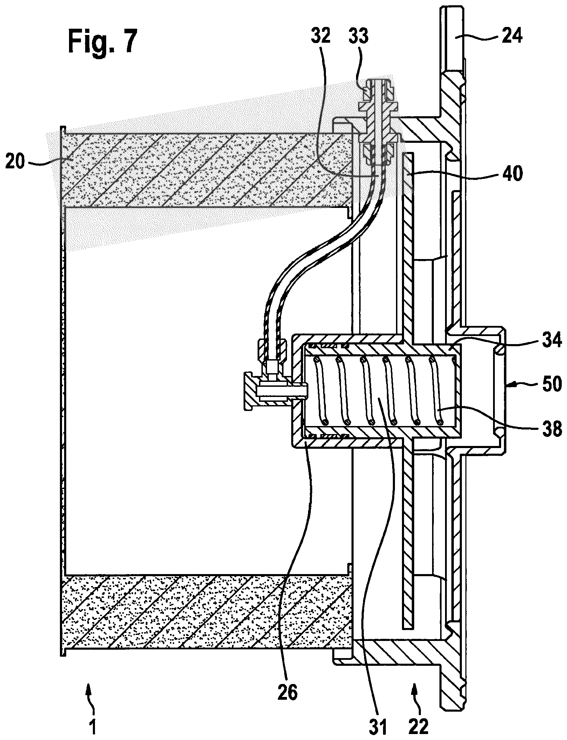

Das Ausführungsbeispiel gemäß den Figuren 6 oder 7 ähnelt prinzipiell demjenigen nach den Figuren 2 und 3. Es unterscheidet sich darin, dass nun mehrere Öffnungen 50 in dem Flansch 24 vorgesehen sind. Sie können beispielsweise fächerförmig ausgeführt sein. Auch im Mittelpunktsbereich des Deckels 40 ist am Flansch eine kreisförmige Öffnung 50 vorgesehen. Über den einzigen Deckel 40 können nun die fünf Öffnungen 50 verschlossen werden. Hierzu entspricht die Form des Deckels 40 denjenigen der zu verschließenden Öffnungen 50. Jedenfalls ist die Deckelform so gewählt, dass sicher alle Öffnungen 50 verschlossen werden können.

Figur 7 zeigt den geöffneten Zustand. Auch die vom Filter 20 abgewandte Stirnseite des Kolbens 34 ist in der Lage, die mittlere Öffnung 50 zu verschließen. Der Deckel 40, der die restlichen vier Öffnungen 50 verschließt, ist ebenfalls mit dem Kolben 34 verbunden. Hierbei könnte es sich um einen runden Deckel 40 handeln oder um vier fächerförmige Abschnitte, die jeweils separat die vier fächerförmigen Öffnungen verschließen können. Die Kolbenaufnahme 26 ist wiederum ortsfest mit dem Filterverschluss 22 bzw. Filterflansch 24 über die Befestigung 28 verbunden. Die Form des Deckels 40 unterscheidet sich somit entsprechend und hat einen direkten Einfluss auf die Einströmbedingungen des zu filtrierenden Mediums in die Filtereinheit 1. Weiterhin zeichnet sich dieses Ausführungsbeispiel durch eine geringe Bautiefe des Filterflansches 24 aus.

Die Filtereinheit 1 ist als Rückluftfilter ausgeführt, der direkt in der Öffnung des Rückluftkanals 3 angeordnet ist, um eine gasdichte und einfach zu bedienende Klemmung gegen das abzusaugende Gehäuse im Bearbeitungsraum 4 zu ermöglichen. Die Filtereinheit 1 umfasst weiter den Filter 20 mit dichtem, wieder verschließbaren Deckel 40 auf der Rohluftseite bzw. Lufteintrittsseite 9. Der Deckel 40 ist so ausgeführt, dass er federbetätigt schließt und die Filtereinheit 1 durch eine integrierte Dichtung 46 rohluftseitig abdichtet. Die kontaminierte Seite bzw. das kontaminierte Volumen in der Filtereinheit 1 kann somit sicher gekapselt werden.

Für einen sicheren Umgang mit für einen Bediener gefährlichen Stoffen ist der komplette Bearbeitungsraum 4 und die dem Bearbeitungsraum 4 zugewandte Seite des Deckels 40 zu reinigen, bevor das Barrieresystem 2 geöffnet werden kann. Zum Wechseln des Filters 20 ist die komplette Filtereinheit 1 auszutauschen.

Zum Wechseln ist die Filtereinheit 1 nur noch vom Gehäuse zu demontieren und evtl. zu sichern. Hierbei kann die Sicherheit noch erhöht werden, indem man die Filtereinheit 1 nach dem Ausbau beispielsweise in eine Schutzfolie oder einen Container verpackt. Anschließend kann die neue Filtereinheit 1 montiert werden.

Für eine Betätigung des Bewegungsmechanismus des Deckels 40 sind zumindest Kolben 34 und eine Kolbenaufnahme 26 vorgesehen. Der Innenraum der Kolbenaufnahme 26 ist bevorzugt druckdicht gegenüber dem Innenraum der Filtereinheit 1 ausgeführt und bildet den Druckraum 31. Dies gewährleisten entsprechende Dichtungen 48, die zwischen Kolben 34 und Kolbenaufnahme 26 angeordnet sind. Über die Druckverhältnisse in diesem Druckraum 31 kann die Bewegung des Kolbens 34 relativ zur Kolbenaufnahme 26 gesteuert werden. Hierzu ist an dem Druckraum 31 der Anschluss 30 vorgesehen. Über den Anschluss 30 mündet die Leitung 32 in den Druckraum 31. Über diese zumindest eine Leitung 32 können die Druckverhältnisse im Druckraum 31 beeinflusst werden. Die Leitung 32 ist an die Außenseite der Filtereinheit 1 geführt. Dort kann sie über den äußeren Anschluss 33 mit einer im Gehäuse des Barrieresystems 2 verbundenen Hauptleitung verbunden werden. An dieser Hauptleitung können mehrere Filtereinheiten 1 im eingebauten Zustand angeschlossen sein und somit ggf. auch gleichzeitig geöffnet und geschlossen werden. Kolben 34 und Kolbenaufnahme 26 können beispielsweise zylinderförmig ausgebildet sein. Prinzipiell sind jedoch auch andere Formen denkbar.

Über die Relativbewegung von Kolben 34 und Kolbenaufnahme 26 wird der Deckel 40 bewegt. In den Ausführungsbeispielen ist hierzu der Kolben 34 mit dem Deckel 40 verbunden. Prinzipiell könnte jedoch auch die Kolbenführung 26 mit dem Deckel 40 verbunden werden, während der Kolben 34 fest mit dem Filterverschluss 22, dem Filterflansch 24 bzw. dem Filter 20 verbunden ist. Wesentlich ist jedenfalls, dass Kolben 34 und Kolbenaufnahme 26 im Innenraum der auswechselbaren Filtereinheit 1 als integrale Bestandteile angeordnet sind. Zur Betätigung von Kolben 34 und Kolbenaufnahme 26 ist als einzige Schnittstelle der äußere Anschluss 33 vorgesehen als Verbindung zu einer Hauptleitung.

Die Relativbewegung zwischen Kolben 34 und Kolbenaufnahme 26 können auf unterschiedliche Art und Weise erzeugt werden. Denkbar wäre beispielsweise die Verwendung einer Hydraulikeinheit, so dass als Leitung 32 eine Hydraulikleitung vorzusehen wäre. Ebenfalls könnte mit Unter- oder Überdruck gearbeitet werden.

Auch eine elektrisch oder elektromagnetisch betätigbare Verstellung von Kolben 34 und Kolbenführung 26 wären durchaus denkbar.

Auch die Bewegung des Deckels 40 relativ zu den Öffnungen 50 könnte auf anderem Wege erfolgen. So könnten beispielsweise in dem Deckel 40 noch weitere Öffnungen vorgesehen werden, welche durch Drehung in Überdeckung mit den Öffnungen 50 zum Durchlass der Luftströmung 18 gebracht werden, während ein Verschließen die Öffnungen 50 durch geschlossene Sektionen des Deckels 40 überdeckt werden könnten. Somit könnte statt einer axialen Bewegung auch eine Drehbewegung erzeugt werden. Auch könnte eine Überlagerung von Dreh- und Hubbewegung in Erwägung gezogen werden. Hierbei könnten Kolben 34 und Kolbenführung 36 über ein Gewindeprinzip miteinander in Verbindung stehen. Beispielsweise bei einer Drehung am Deckel 40 macht dieser eine Axialbewegung.

Der Filterverschluss 22 umfasst den Filterflansch 24, über den die Verbindung mit einem Gehäuse oder ähnliches insbesondere eines Barrieresystems 2 hergestellt werden kann. Hierzu sind beispielsweise Aufnahmen für Schrauben oder sonstige Verbindungselemente vorgesehen.

Die Filtereinrichtung 1 eignet sich insbesondere für den Einsatz von Barrieresystemen 1 für beispielsweise Reinräume, Isolatoren, Containment-Systeme oder sog. cRABS (closed Restricted Access Barrier System). Beispielhaft ist in dem Ausführungsbeispiel nach Figur 1 der Einsatz für einen Isolator gezeigt.

## Patentansprüche

1. Filtereinheit (1) zum Einsetzen in einen Rückluft- oder Abluftkanal (3) eines Barrieresystems (2), umfassend einen Filterverschluss (22) zur Verbindung der Filtereinheit (1) mit einem Barrieresystem (2), wobei der Filterverschluss (22) zumindest einen Filterflansch (24) mit zumindest einer Öffnung (50) aufweist,
- ein mit dem Filterverschluss (22) strömungstechnisch verbundenes Filtermittel (20) zur Reinigung der über die Öffnung (50) von einem Bearbeitungsraum des Barrieresystems (2) zugeführten Luft und Abgabe in den Rückluft- oder Abluftkanal (3),
- zumindest einen Deckel (40) zum Öffnen und Schließen der Öffnung (50), wobei die Filtereinheit (1) einen über den Deckel (40) verschließbaren Innenraum aufweist zur Kapselung von Gefahrenstoffen aufweist,
**dadurch**
**gekennzeichnet, dass**
die Filtereinheit (1) zum
Bewegen des Deckels (40) im Inneren zumindest eine Kolbenaufnahme (34) und einen hierzu relativ bewegbaren Kolben (34) umfasst, der in der Kolbenaufnahme (26) beweglich gelagert ist, und dass
Aufnahme (26) und Kolben (34) über eine Feder, vorzugsweise eine Druckfeder (38), gegeneinander vorgespannt sind.

2. Filtereinheit nach Anspruch 1,
**dadurch gekennzeichnet, dass**
zumindest eine Leitung (32) im Inneren der Filtereinheit (1) vorgesehen ist zur Beeinflussung der Relativbewegung zwischen Kolben (34) und Kolbenaufnahme (26).

3. Filtereinheit nach einem der vorhergehenden Ansprüche,
**dadurch gekennzeichnet, dass**
die Kolbenaufnahme (26) zumindest einen Anschluss (30) umfasst, über den die Leitung (32) mit der Kolbenaufnahme (26) verbunden ist.

4. Filtereinheit nach einem der vorhergehenden Ansprüche,
umfassend zumindest einen äußeren Anschluss (33), über den
die Leitung (32) im Inneren der Filtereinheit (1) zur Beeinflussung der Relativbewegung zwischen Kolben (34) und Kolbenaufnahme (26) mit einer Hauptleitung im Isolator (2) oder Reinraum verbunden werden kann.

5. Filtereinheit nach einem der vorhergehenden Ansprüche,
**dadurch gekennzeichnet, dass**
die Kolbenaufnahme (26) durch eine Befestigung (28) mit dem Filterverschluss (22) und/oder dem Filterflansch (24) verbunden ist.

6. Filtereinheit nach einem der vorhergehenden Ansprüche,
**dadurch gekennzeichnet, dass** zwischen Kolben (34) und Kolbenaufnahme (26) zumindest eine
Dichtung (48) und/oder eine Kolbenführung (36) angeordnet sind.

7. Filtereinheit nach einem der vorhergehenden Ansprüche,
**dadurch gekennzeichnet, dass**
die Kolbenaufnahme (26) oder der Kolben (34) mit dem Deckel (40) verbunden ist.

8. Filtereinheit nach einem der vorhergehenden Ansprüche,
**dadurch gekennzeichnet, dass**
der Deckel (40) die Öffnung (50) mit seiner dem Filtermittel (20) zugewandten Seite verschließt.

9. Filtereinheit nach einem der vorhergehenden Ansprüche,
**dadurch gekennzeichnet, dass**
der Deckel (40) die Öffnung (50) mit seiner dem Filtermittel (20) abgewandten Seite verschließt.

10. Filtereinheit nach einem der vorhergehenden Ansprüche,
**dadurch gekennzeichnet, dass** an dem
Filterflansch (24) zumindest eine Verschlussdichtung (46) angeordnet ist.

11. Filtereinheit nach einem der vorhergehenden Ansprüche,
**dadurch gekennzeichnet, dass**
zur Bewegung des Kolbens (34) der Aufnahme (26) elektrisch, hydraulisch oder pneumatisch betätigt wird.

12. Filtereinheit nach einem der vorhergehenden Ansprüche,
**dadurch gekennzeichnet, dass**
der Deckel (40) in einer Hub- und/oder in einer Rotationsbewegung betätigt wird zum Verschließen der Öffnung (50).

13. Filtereinheit nach einem der vorhergehenden Ansprüche,
**dadurch gekennzeichnet, dass**
mehrere Öffnungen (50) vorgesehen sind, die der Deckel (40) zumindest teilweise verschließt.

## Claims

1. Filter unit (1) for inserting into a return-air or waste-air duct (3) of a barrier system (2), comprising a filter closure (22) for connecting the filter unit (1) to a barrier system (2), the filter closure (22) having at least one filter flange (24) with at least one opening (50),
- a filter medium (20) which is flow-connected to the filter closure (22) for cleaning the air which is fed in via the opening (50) from a processing space of the barrier system (2) and discharging it into the return-air or waste-air duct (3),
- at least one cover (40) for opening and closing the opening (50), the filter unit (1) having an interior space which can be closed via the cover (40) for encapsulating hazardous substances,
**characterized in that**, in order to move the cover (40), the filter unit (1) comprises, in the interior, at least one piston holder (34) and a piston (34) which can be moved relative to the latter and is mounted movably in the piston holder (26), and **in that** the holder (26) and the piston (34) are prestressed against one another via a spring, preferably a compression spring (38).

2. Filter unit according to Claim 1, **characterized in that** at least one line (32) is provided in the interior of the filter unit (1) for influencing the relative movement between the piston (34) and the piston holder (26) .

3. Filter unit according to either of the preceding claims, **characterized in that** the piston holder (26) comprises at least one connector (30), via which the line (32) is connected to the piston holder (26).

4. Filter unit according to one of the preceding claims, comprising at least one outer connector (33), via which the line (32) in the interior of the filter unit (1) for influencing the relative movement between the piston (34) and the piston holder (26) can be connected to a main line in the isolator (2) or cleanroom.

5. Filter unit according to one of the preceding claims, **characterized in that** the piston holder (26) is connected by way of a fastening means (28) to the filter closure (22) and/or the filter flange (24).

6. Filter unit according to one of the preceding claims, **characterized in that** at least one seal (48) and/or a piston guide (36) are/is arranged between the piston (34) and the piston holder (26).

7. Filter unit according to one of the preceding claims, **characterized in that** the piston holder (26) or the piston (34) is connected to the cover (40).

8. Filter unit according to one of the preceding claims, **characterized in that** the cover (40) closes the opening (50) by way of its side which faces the filter medium (20).

9. Filter unit according to one of the preceding claims, **characterized in that** the cover (40) closes the opening (50) by way of its side which faces away from the filter medium (20).

10. Filter unit according to one of the preceding claims, **characterized in that** at least one closure seal (46) is arranged on the filter flange (24).

11. Filter unit according to one of the preceding claims, **characterized in that** the holder (26) is actuated electrically, hydraulically or pneumatically in order to move the piston (34).

12. Filter unit according to one of the preceding claims, **characterized in that** the cover (40) is actuated in a lifting movement and/or in a rotational movement in order to close the opening (50).

13. Filter unit according to one of the preceding claims, **characterized in that** a plurality of openings (50) are provided which the cover (40) closes at least partially.

## Revendications

1. Unité de filtration (1) à utiliser dans un canal d'air de retour ou d'évacuation d'air (3) d'un système de barrière (2), comprenant un obturateur de filtre (22) pour l'assemblage de l'unité de filtration (1) à un système de barrière (2), dans laquelle l'obturateur de filtre (22) présente au moins une bride de filtre (24) avec au moins une ouverture (50),
- un moyen de filtration (20) assemblé techniquement en écoulement à l'obturateur de filtre (22) pour l'épuration de l'air envoyé par l'ouverture (50) à partir d'une chambre de traitement du système de barrière (2) et pour la décharge dans le canal d'air de retour ou d'évacuation d'air (3),
- au moins un couvercle (40) pour ouvrir et fermer l'ouverture (50), l'unité de filtration (1) présentant une chambre intérieure pouvant être fermée au moyen du couvercle (40) pour entourer des substances dangereuses,
**caractérisée en ce que** l'unité de filtration (1) comprend, pour le déplacement du couvercle (40) à l'intérieur au moins un logement de piston (34) et un piston (34) mobile par rapport à celui-ci, qui est monté de façon mobile dans le logement de piston (26), et **en ce que** le logement (26) et le piston (34) sont précontraints l'un par rapport à l'autre au moyen d'un ressort, de préférence un ressort de pression (38).

2. Unité de filtration selon la revendication 1, **caractérisée en ce qu'**il est prévu au moins une conduite (32) à l'intérieur de l'unité de filtration (1) pour influencer le mouvement relatif entre le piston (34) et le logement de piston (26).

3. Unité de filtration selon l'une quelconque des revendications précédentes, **caractérisée en ce que** le logement de piston (26) comporte au moins un raccord (30), par lequel la conduite (32) est raccordée au logement de piston (26).

4. Unité de filtration selon l'une quelconque des revendications précédentes, comprenant au moins un raccord extérieur (33), par lequel la conduite (32) peut être raccordée à l'intérieur de l'unité de filtration (1) à une conduite principale dans l'isolateur (2) ou la chambre propre pour influencer le mouvement relatif entre le piston (34) et le logement de piston (26).

5. Unité de filtration selon l'une quelconque des revendications précédentes, **caractérisée en ce que** le logement de piston (26) est assemblé à l'obturateur de filtre (22) et/ou à la bride de filtre (24) par une fixation (28).

6. Unité de filtration selon l'une quelconque des revendications précédentes, **caractérisée en ce qu'**au moins un joint d'étanchéité (48) et/ou un guidage de piston (36) sont disposés entre le piston (34) et le logement de piston (26).

7. Unité de filtration selon l'une quelconque des revendications précédentes, **caractérisée en ce que** le logement de piston (26) ou le piston (34) est relié au couvercle (40).

8. Unité de filtration selon l'une quelconque des revendications précédentes, **caractérisée en ce que** le couvercle (40) ferme l'ouverture (50) avec son côté tourné vers le moyen de filtration (20).

9. Unité de filtration selon l'une quelconque des revendications précédentes, **caractérisée en ce que** le couvercle (40) ferme l'ouverture (50) avec son côté détourné du moyen de filtration (20).

10. Unité de filtration selon l'une quelconque des revendications précédentes, **caractérisée en ce qu'**au moins un joint d'étanchéité de fermeture (46) est disposé sur la bride de filtre (24).

11. Unité de filtration selon l'une quelconque des revendications précédentes, **caractérisée en ce que** pour le mouvement du piston (34), on opère un actionnement électrique, hydraulique ou pneumatique sur le logement (26) .

12. Unité de filtration selon l'une quelconque des revendications précédentes, **caractérisée en ce que** le couvercle (40) est actionné en un mouvement de levée et/ou en un mouvement de rotation pour fermer l'ouverture (50).

13. Unité de filtration selon l'une quelconque des revendications précédentes, **caractérisée en ce qu'**il est prévu plusieurs ouvertures (50), que le couvercle (40) ferme au moins en partie.
